# EUROPEAN PATENT SPECIFICATION

(11) **EP 0 534 262 B1**
(45) Date of publication and mention of the grant of the patent: **16.01.2002**
(21) Application number: 92115679.0
(22) Date of filing: 14.09.1992
(51) Int. Cl.: G06F 13/38

(54) **Open architecture video pipe system**
Video-System mit einer offenen Architektur
Système vidéo avec une architecture ouverte

(30) Priority: 27.09.1991 US 766885
(43) Date of publication of application: 31.03.1993
(73) Proprietor: TEXAS INSTRUMENTS INCORPORATED, Dallas Texas 75265 (US)
(72) Inventor: Sampsell, Jeffrey B., Plano, Texas 75075 (US)
(74) Representative: Schwepfinger, Karl-Heinz, Dipl.-Ing.

(56) References cited:
- WO-A-91/15920
- PATENT ABSTRACTS OF JAPAN vol. 12, no. 85 (E-591), 17 March 1988 & JP-A-62 219881 (FUJITSU GENERAL LIMITED), 28 September 1987,

## Description

### BACKGROUND OF THE INVENTION

### 1. Field of the Invention

This invention relates to displays and video systems, more particularly to architectures for them.

### 2. Background of the Invention

Recently, there has been heightened interest in a system that is portable between computers and television for video display. With the advent of multi-media computing, such as being developed at Microsoft, Intel, Apple, etc., users can access real-time video images and display them on a portion of the screen. But the architecture of the computer is not one that can support a full screen real-time video image.

Currently, televisions are portable between television and computer displays. Indeed, some users even used an extra television as a monitor rather than buy a dedicated monitor. But television are limited in their support of such configurations. There are many problems, but the most significant is bandwidth.

Televisions are designed to receive a large bandwidth signal from an antenna or a cable connection. These signals are sent to a tuner, which isolates the relevant channel, or channels, and sends them to the appropriate output, such as the display, the VCR, or both. Computers do not have a tuner, therefore they cannot handle the large bandwidth signal. On the other hand, the television is merely set up, usually via an adapter, to receive signals from the computer as if it were a dedicated channel.

Portability between the two systems would allow for many advantages. Interactive television would be given a whole range of possibilities. For example, a viewer may have, in addition, or instead of a remote control, a remote keyboard that can allow he or she to save television broadcasts, movies, or other important information. Also, the computer user can access broadcast, or recorded, television while working on the computer to create such things as multi-media presentations.

The television and computer industries have not progressed to a point where this is going to be immediately possible. This limitation is not one of technology, but one where neither industry is willing to compromise any standards or non-portable functions. Ideally, television and computer manufacturers need a way to build a system that is functional now, and flexible to be updated for the future.

A multifunctional TV receiving set is known from Patent Abstracts of Japan, volume 12, number 85 (E-591), 17 March 1988, and JP-A-62219881. To make multiple functions possible, slots for a CRT, a personal computer, a CAPTAIN, character broadcast, a word processor and software for personal computer and word processor are provided in front of the body of a receiving set. IC cards for character broadcast, CAPTAIN, a word processor and a personal computer are connected through a bus in the input side of a control section. The input side of the IC card for character broadcast is connected to a TV receiving section, and the output side is connected to an image sound switching circuit.

### SUMMARY OF THE INVENTION

Objects and advantages will be obvious, and will in part appear hereinafter and will be accomplished by the present invention which provides a portable architecture for video graphics adaptation and for television. A system as defined in claim 1 is provided by the invention. The card slots can be filled with various cards including, but not limited to, tuner cards, video cassette controller cards, video graphics card for computers, special effects cards, and remote control input cards.

### BRIEF DESCRIPTION OF THE DRAWINGS

For a complete understanding of the invention, and the advantages thereof, reference is now made to the following description in conjunction with the accompanying drawings, in which:

FIGURE 1 shows a bare bus structure.

FIGURE 2 shows an empty receiver architecture.

FIGURE 3 shows a possible configuration of a populated receiver architecture.

### DETAILED DESCRIPTION OF THE PREFERRED EMBODIMENTS

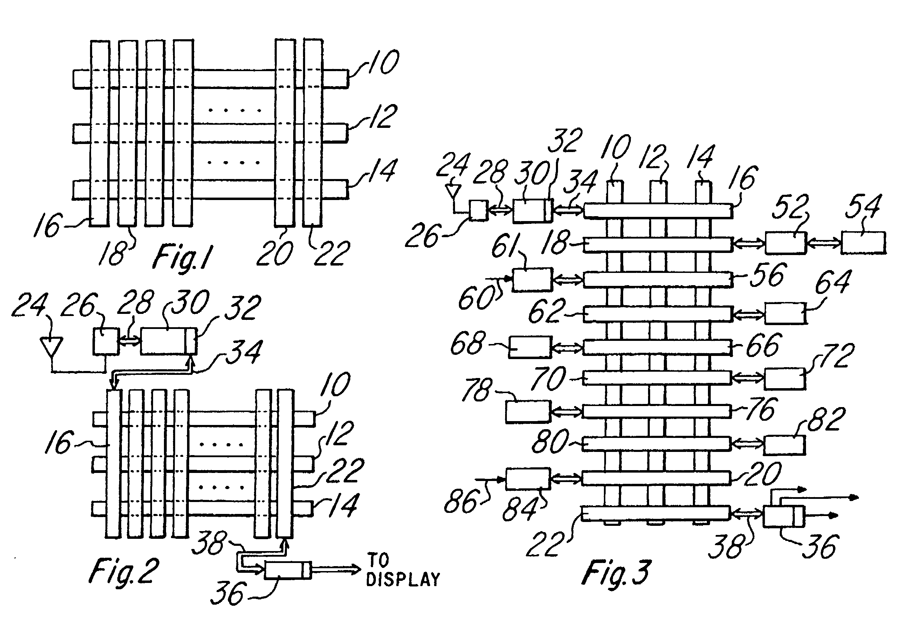

In order to effect a complete compatibility between computers and televisions, a chassis must be designed to accommodate both functions. The chassis must include some type of architecture that can be configured many different ways. One possible architecture to be contained in the chassis is shown in Figure 1.

Figure 1 shows a possible bus structure that would be included in the television/monitor chassis. Typically, this would be on a board that is the equivalent to a personal computer's motherboard. Shown in this example are three busses. The number of busses used is only limited by the designers' desires to break down the main functions of the television/monitor into subfunctions.

In this example, there are three busses: an audio bus 10; a video bus 12; and a control bus 14. The busses are on the surface of the board, and edge connectors 16, 18, through 20, and 22, are attached on top of the bus lines. For example, the audio bus would be 12 bits wide, or any other bus width/clock rate combinations commensurate with CD quality audio. Obviously, a wide bus would be used to support stereo sound. The video bus is (N+1)*9 bits wide, where N is the number of connectors dedicated to add-on cards. More or less than 9 bits could be used depending on the video encoding scheme used. Finally, the control bus could be 8 bits although a 4- or 16-bit bus would be just as appropriate, depending upon the bus controller. Edge connector 16 is designated as connection 1, 18 is connection 2, and edge connector 20 is connection N. Connector 22 is connection N+1. Additionally, the functions could all be included in one bus structure.

Figure 2 shows an empty architecture receiver. The bus structure has been integrated with a television receiving circuit, and a video circuit card to drive the display. The television signal comes into the system via antenna 24, is passed to a tuner 26 which in turn sends the signal to video formatter 30 along bus 28. The video formatter has a analog-to-digital converter 32 attached, which converts the incoming signal to be placed on the busses. The digitized signal is sent to the busses via lines 34, into slot 16 which will contain a card. Alternatively, all of the preceding functions could be contained on the card itself, or contained on the motherboard itself, and connected directly to the bus through traces on the board. The card in slot 16 would have circuitry upon it to divide the incoming signal up into a control signal, an audio signal, and a video signal in this example.

At the other end of the receiver, connected to slot 22, is the circuitry to control the output of the display. Bus 38 connects to the connector in slot 22, and communicates the output to the driver 36. Driver 36 has a digital-to-analog converter attached which converts the data necessary to drive the cathode ray tube. If a digital display, such as a deformable mirror device television were to be used, the digital-to-analog converter could be eliminated. In this case, no bus switching circuitry need be provided. The tuner and video card could be hard configured to send and receive on the same partition of the video bus.

Figure 3 shows one of many possible configurations of a fully populated receiver. In addition to the cards already mentioned, other possibilities are: a memory processor 52, with remote input block 54, in slot 18. In slot 56, a remote input and output module 61, with input line 60. The image processor 64 for the display could be in slot 62. Storage controller 68, which could control an external tape drive, is shown in slot 66. A special effects card 72, for controlling such things as windowed screens, slow motion, etc., is in slot 70. Slot 76 holds the controller card for the hard copy output device 78, such as a printer, from the computer. Slot 80 contains a card for controlling an optional display module 82. Audio control of the system is on the card in slot 20, which controls the audio driver 84, with its input 86.

These slots could be placed inside the chassis, much like current personal computer practice, or inside the chassis but easily accessible like current video game practice, or totally open on the enclosure surface. These different physical architectures allow hardware/electrical control architectures to serve different markets.

The overall population of the chassis can be effected in a cartridge format, not unlike home video games. There are many different scenarios. One is that the consumer decides in the electronics store what extras he or she wants. The salesman then populates the slots with the appropriate cartridges, which contain the controllers mentioned above. Some consumers may decide to just buy the chassis, and populate the slots themselves. This system also lends itself to upgrades very easily.

The assignments of slots is completely arbitrary. Likewise, the assignments of bus partitions could also be done in many ways. The partitions could be preassigned and labelled, so when the consumer decides to upgrade, he or she merely buys the cartridge and switch selects it to the appropriate partitions. With a little more complex controllers, the partitions could be universal. The cards would have an identifier in their hardware that allowed them to know which partition on the bus is for them. Additionally, the cards could have some type of acknowledger in them to let the system control card, or the tuner card, know what partition they are on. Partition switching or selecting on each card could be hardwired by jumper, for the lowest cost, local switch selectable, for medium cost, or remotely switch selectable at highest cost. Any external connectors could be mounted on the end of the cartridge away from the end connector, or alternately in a panel or door, such that when the panel or door was closed, the connectors made the appropriate contact through the door. All methods are mutually compatible and can be used simultaneously in the same system, and no method requires expensive bus demultiplexing circuitry since each card uses a dedicated portion of the bus.

The advantages of such a system are numerous. Some of these are modularity, expandability, and portability. A modular television/monitor console is easier to upgrade and to repair. When a standard for HDTV is finally decided, if it requires a change in the tuner, or a change in the display, just the tuner card, or the display needs to be changed. If the display is spatial light modulator driven, with binary inputs, it may be that the controller for the display be changed, not the entire CRT module. When HDTV becomes a reality, a new controller, or whatever is required to allow the upgrade will be easier to install. This system is portable between television and video graphics. It can be used now, and in the future.

Thus, although there has been described to this point a particular embodiment for a television/monitor, it is not intended that such specific references be considered as limitations upon the scope of this invention except in-so-far as set forth in the following claims.

## Claims

1. A display system including:
a. at least three buses (10,12,14) operable to transfer digital signals, one bus (10) for audio data, one bus (12) for video data, and one bus (14) for control data;
b. a plurality of slots (16,18,...,20,22) traversing the width of said at least three buses (10,12,14), said slots (16,18,...,20,22) capable of making electrical connection with at least one external circuit board.

2. The display system as claimed in claim 1, wherein one of said at least one board is a television tuner circuit operable to receive broadcast television of a standard format.

3. The display system as claimed in claim 1, wherein one of said at least one board is a cathode ray tube driver board.

4. The display system as claimed in claim 1, wherein one of said at least one board is a spatial light modulator display driver board.

5. The display system as claimed in claim 1, wherein one of said at least one board is a video recorder control board.

6. The display system as claimed in claim 1, wherein one of said at least one board is a memory board.

7. The display system as claimed in claim 1, wherein one of said at least one board is a display driver board.

8. The display system as claimed in claim 1, wherein one of said at least one board is a special effects board.

9. The display system as claimed in claim 1, wherein one of said at least one board is a remote control reception processor board.

10. The display system as claimed in claim 1, wherein one of said at least one board is an audio control board.

11. The display system as claimed in claim 1, wherein one of said at least one board is a hard copy controller.

12. The display system as claimed in claim 1, wherein said buses are parallel to each other and further comprising:
c. a television tuner circuit in one of said slots, operable to receive and process a standardized broadcast signal;
d. a video graphics adapter in another of said slots, operable to process data from a computer for display; and
e. a display driver card in another of said slots, operable to produce an image upon receipt of said processed standardized broadcast signal, or said video graphics signal.

13. The display system as claimed in claim 12 wherein another of said slots contains a video player/recorder controller.

14. The display system as claimed in claim 12 wherein another of said slots contains a memory controller circuit.

15. The display system as claimed in claim 12 wherein another of said slots contains a special effects video processor card.

16. The display system as claimed in claim 12 wherein another of said slots contains a remote control input processor card.

17. The display system as claimed in claim 12 wherein another of said slots contains an audio controller card.

18. The display system as claimed in claim 12 wherein another of said slots contains a hard copy controller card.

19. The display system as claimed in claim 18 wherein said hard copy controller card is further connected to a printer.

## Patentansprüche

1. Anzeigesystem, mit:
a. wenigstens drei Bussen (10, 12, 14), die so betreibbar sind, daß sie digitale Signale übertragen, ein Bus (10) für Audiodaten, ein Bus (12) für Videodaten und ein Bus (14) für Steuerdaten;
b. mehreren Steckplätzen (16, 18, ..., 20, 22), die in Breitenrichtung der wenigstens drei Busse (10, 12, 14) verlaufen, wobei die Steckplätze (16, 18, ..., 20, 22) eine elektrische Verbindung mit wenigstens einer externen Schaltungskarte herstellen können.

2. Anzeigesystem nach Anspruch 1, bei dem eine der wenigstens einen Karte eine Fernsehabstimmschaltung ist, die so betreibbar ist, daß sie Fernsehsendungen in einem Standardformat empfängt.

3. Anzeigesystem nach Anspruch 1, bei dem eine der wenigstens einen Karte eine Kathodenstrahlröhren-Ansteuerungskarte ist.

4. Anzeigesystem nach Anspruch 1, bei dem eine der wenigstens einen Karte eine Ansteuerungskarte für eine Anzeige mittels räumlicher Lichtmodulatoren ist.

5. Anzeigesystem nach Anspruch 1, bei dem eine der wenigstens einen Karte eine Videorecorder-Steuerkarte ist.

6. Anzeigesystem nach Anspruch 1, bei dem eine der wenigstens einen Karte eine Speicherkarte ist.

7. Anzeigesystem nach Anspruch 1, bei dem eine der wenigstens einen Karte eine Anzeige-Ansteuerungskarte ist.

8. Anzeigesystem nach Anspruch 1, bei dem eine der wenigstens einen Karte eine Karte für Spezialeffekte ist.

9. Anzeigesystem nach Anspruch 1, bei dem eine der wenigstens einen Karte eine Fernsteuerungs-Empfangsprozessorkarte ist.

10. Anzeigesystem nach Anspruch 1, bei dem eine der wenigstens einen Karte eine Audio-Steuerkarte ist.

11. Anzeigesystem nach Anspruch 1, bei dem eine der wenigstens einen Karte ein Hardcopy-Controller ist.

12. Anzeigesystem nach Anspruch 1, bei dem die Busse zueinander parallel sind und ferner umfassen:
c. eine Fernsehabstimmschaltung in einem der Steckplätze, die so betreibbar ist, daß sie genormte Rundfunksignale empfängt und verarbeitet;
d. einen Videographikadapter in einem weiteren der Steckplätze, der so betreibbar ist, daß er Daten von einem Computer für die Anzeige verarbeitet; und
e. eine Anzeigetreiberkarte in einem weiteren der Steckplätze, die so betreibbar ist, daß sie bei Empfang des verarbeiteten genormten Rundfunksignals oder des Videographiksignals ein Bild erzeugt.

13. Anzeigesystem nach Anspruch 12, bei dem ein weiterer der Steckplätze einen Videoabspielgerät-/Videoaufzeichnungsgerät-Controller enthält.

14. Anzeigesystem nach Anspruch 12, bei dem ein weiterer der Steckplätze eine Speichercontroller-Schaltung enthält.

15. Anzeigesystem nach Anspruch 12, bei dem ein weiterer der Steckplätze eine Videoprozessorkarte für Spezialeffekte enthält.

16. Anzeigesystem nach Anspruch 12, bei dem ein weiterer der Steckplätze eine Fernsteuerungs-Eingangsprozessorkarte enthält.

17. Anzeigesystem nach Anspruch 12, bei dem ein weiterer der Steckplätze eine Audiocontroller-Karte enthält.

18. Anzeigesystem nach Anspruch 12, bei dem ein weiterer der Steckplätze eine Hardcopycontroller-Karte enthält.

19. Anzeigesystem nach Anspruch 18, bei dem die Hardcopycontroller-Karte ferner mit einem Drucker verbunden ist.

## Revendications

1. Système d'affichage comprenant :
a. au moins trois bus (10, 12, 14) aptes à fonctionner pour transférer des signaux numériques, un bus (10) pour des données audio, un bus (12) pour des données vidéo et un bus (14) pour des données de commande ;
b. une pluralité de fentes (16, 18..., 20, 22) traversant la largeur desdits au moins trois bus (10, 12, 14), lesdites fentes (16, 18..., 20, 22) étant aptes à établir une connexion électrique avec au moins une plaque de circuit externe.

2. Système d'affichage selon la revendication 1, dans lequel l'une desdites au moins une plaque est un circuit d'accord de télévision pouvant fonctionner pour recevoir des signaux de télévision radiodiffusés d'un format standard.

3. Système d'affichage selon la revendication 1, dans lequel l'une desdites au moins une plaque est une plaque de commande d'un tube à rayons cathodiques.

4. Système d'affichage selon la revendication 1, dans lequel l'une desdites au moins une plaque est une plaque de commande d'un afficheur à modulateur spatial de lumière.

5. Système d'affichage selon la revendication 1, dans lequel l'une desdites au moins une plaque est une plaque de commande d'un enregistreur vidéo.

6. Système d'affichage selon la revendication 1, dans lequel l'une desdites au moins une plaque est une plaque à mémoire.

7. Système d'affichage selon la revendication 1, dans lequel l'une desdites au moins une plaque est une plaque de commande d'affichage.

8. Système d'affichage selon la revendication 1, dans lequel l'une desdites au moins une plaque est une plaque à effets spéciaux.

9. Système d'affichage selon la revendication 1, dans lequel l'une desdites au moins une plaque est une plaque à processeur de réception de signaux de télécommande.

10. Système d'affichage selon la revendication 1, dans lequel l'une desdites au moins une plaque est une plaque de commande audio.

11. Système d'affichage selon la revendication 1, dans lequel l'une desdites au moins une plaque est un dispositif de commande de sortie sur support en papier.

12. Système d'affichage selon la revendication 1, dans lequel lesdits bus sont parallèles entre eux et comprennent en outre :
c. un circuit d'accord de télévision dans l'une desdites fentes, apte à fonctionner pour recevoir et traiter un signal de radiodiffusion normalisé ;
d. un adaptateur graphique vidéo dans une autre desdites fentes, apte à fonctionner pour traiter des données provenant d'un ordinateur pour l'affichage ;
et
e. une carte de commande d'affichage dans une autre desdites fentes, apte à fonctionner pour produire une image suite à la réception dudit signal de radiodiffusion normalisé et traité, ou dudit signal graphique vidéo.

13. Système d'affichage selon la revendication 12, dans lequel une autre desdites fentes contient un dispositif de commande de lecteur/enregistreur vidéo.

14. Système d'affichage selon la revendication 12, dans lequel une autre desdites fentes contient un circuit de commande de mémoire.

15. Système d'affichage selon la revendication 12, dans lequel une autre desdites fentes contient une carte à processeur vidéo d'effets spéciaux.

16. Système d'affichage selon la revendication 12, dans lequel une autre desdites fentes contient une carte à processeur d'entrée de signaux de télécommande.

17. Système d'affichage selon la revendication 12, dans lequel une autre desdites fentes contient une carte de commande audio.

18. Système d'affichage selon la revendication 12, dans lequel une autre desdites fentes contient une carte de commande de sortie sur support en papier.

19. Système d'affichage selon la revendication 18, dans lequel ladite carte de commande de sortie sur support en papier est connectée en outre à une imprimante.
